# FASCICULE DE BREVET EUROPEEN

(11) **EP 1 381 131 B1**
(45) Date de publication et mention de la délivrance du brevet: **07.12.2011**
(21) Numéro de dépôt: 03291512.6
(22) Date de dépôt: 20.06.2003
(51) Int. Cl.: H02H 7/18, H02J 7/00

(54) **Dispositif de protection perfectionné à circuits 1S pour un ensemble de batterie de générateurs électrochimiques**
Verbesserte Schutzeinrichtung mit 1S Schaltungen für elektrochemische Batterienanordnungen
Improved protection device with 1S circuits for electrochemical battery assemblies

(30) Priorité: 11.07.2002 FR 0208730
(43) Date de publication de la demande: 14.01.2004
(73) Titulaire: SAFT, 93170 Bagnolet (FR)
(72) Inventeur: Faure, Frédéric, 86000 Poitiers (FR); Savin, Jean-François, 86280 St. Benoit (FR); Maloizel, Serge, 16730 Trois Palis (FR)
(74) Mandataire: Pochart, François

(56) Documents cités:
- EP-A- 0 880 214
- US-A- 6 060 864

## Description

L'invention concerne le domaine des batteries de générateurs électrochimiques, et plus particulièrement celui des dispositifs de protection qui équipent certaines batteries rechargeables.

De nombreuses batteries, constituées de modules comprenant un ou plusieurs générateurs électrochimiques secondaires ou rechargeables (ou encore accumulateurs), sont équipées d'un circuit de protection destiné à éviter qu'elles ne fassent l'objet de surcharges ou de fortes décharges. C'est notamment le cas des batteries de type lithium-ion (ou Li-ion) qui équipent certains téléphones portables. Parmi les circuits bien connus de l'homme de l'art, on peut notamment citer ceux dits « nS », n étant généralement compris entre 1 et 10 selon le nombre (n) de modules de générateurs électrochimiques montés en série au sein de l'ensemble de batterie.

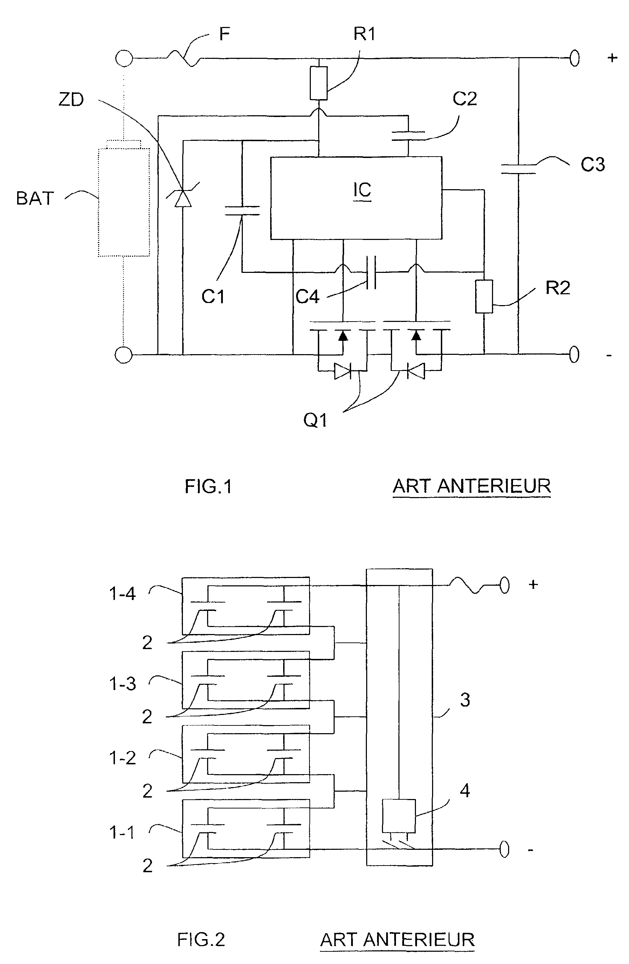

On entend ici par circuit nS, un circuit électronique comprenant notamment un circuit intégré (IC) monté en parallèle avec n modules de générateurs électrochimiques montés en série. Un exemple de circuit 1S de l'art antérieur est illustré sur la figure 1, couplé à un générateur électrochimique BAT. Ce circuit 1S, qui sera décrit en détail plus loin, comporte notamment un circuit intégré lC couplé à des composants tels que des transistors à effet de champ Q1 assurant la commutation, des condensateurs Cj, des résistances Rk et une diode Zener ZD.

Dès lors que l'on veut mettre en série au moins deux générateurs électrochimiques, il faut donc utiliser un circuit électronique 2S, 3S ou 4S. Sur la figure 2 est illustré un exemple schématique d'ensemble de batterie de l'art antérieur, comportant classiquement quatre modules de générateurs électrochimiques 1-i (i=1 à 4), constitués chacun de deux générateurs électrochimiques 2, tels que des générateurs rechargeables Li-ion, couplés à un dispositif de protection 3 muni d'un circuit électronique 4S, assimilé à son circuit intégré 4.

Un tel dispositif de protection, décrit par exemple dans US-A-6060864 ou EP-A-880214 est encombrant et contraignant en raison du câblage qu'il requiert pour la mise en série et la liaison au circuit des points milieux entre générateurs. Il oblige en outre, du fait de la liberté de position du circuit, à avoir une configuration spécifique pour chaque type de batterie.

Par ailleurs, le test des circuits couplés à des modules de générateurs est difficilement industrialisable, dans la mesure où la position de ces circuits varie d'une batterie à l'autre lorsqu'ils ne sont pas intégrés sur une carte d'interconnexion.

De plus, la grande variété de dispositifs de protection nS les rend difficiles à standardiser.

L'invention a donc pour but de remédier à tout ou partie des inconvénients précités.

Elle propose à cet effet un dispositif de protection pour un ensemble de batterie comportant au moins deux modules de générateur(s) électrochimique(s) montés en série et comprenant chacun au moins un générateur électrochimique.

Ce dispositif ce caractérise par le fait qu'il comprend autant de blocs de protection primaires que de modules de générateur(s) électrochimique(s), chaque bloc étant monté en parallèle avec l'un des modules de générateur(s) électrochimique(s) et comportant au moins un circuit électronique de protection, de type « 1S », et une diode montée en parallèle avec le circuit 1S et en amont de celui-ci relativement au sens de circulation du courant.

De la sorte, que l'ensemble de batterie comporte 2, 3, 4, ou n modules de générateur(s) électrochimique(s), on n'utilise plus que des dispositifs de protection à 2, 3, 4 ou n circuits électroniques de type 1S. En d'autres termes, au lieu d'utiliser un dispositif de protection équipé d'un unique circuit électronique nS, on utilise désormais un dispositif de protection équipé de n circuits électroniques 1S. Par conséquent, pour passer d'un type de batterie à un autre, il suffit d'adapter le dispositif de protection en fonction notamment des courants seuils requis.

Par ailleurs, lorsqu'un bloc de protection détecte une sur-décharge du module de générateur(s) auquel il est couplé, en parallèle, sa diode permet de dériver (ou « by-pass ») ledit bloc, de sorte que les autres générateurs en série puissent se décharger, rééquilibrant ainsi l'ensemble de batterie.

Le dispositif peut comprendre un ou plusieurs blocs de protection, dits secondaires, montés en parallèle avec l'un des blocs de protection primaires et comportant au moins un circuit électronique de protection, de type « 1S », et une diode, montée en parallèle avec le circuit électronique 1S et en amont de celui-ci relativement au sens de circulation du courant. Ces blocs de protection secondaires sont avantageusement identiques aux blocs de protection primaires. Cela permet d'adapter le dispositif en fonction des seuils de courant qui peuvent être supportés par certains de ses composants, comme par exemple les dispositifs principaux de commutation des circuits 1S lorsqu'ils sont de type MOSFET.

Au lieu de mettre en parallèle des blocs de protection primaire et secondaire(s), on peut, pour des raisons de facilité de câblage, mettre en parallèle au sein d'un bloc de protection primaire, au moins un dispositif auxiliaire de commutation, par exemple de type MOSFET, avec un dispositif principal de commutation également de type MOSFET.

D'autre part, chaque bloc de protection primaire et/ou chaque bloc de protection secondaire peut comporter un fusible « interne » monté entre une sortie de son circuit de protection et la sortie de sa diode. Ce fusible pourrait être un thermofusible (ou thermostat limiteur de courant), afin de protéger certains composants du bloc de protection, comme par exemple les MOSFETs du dispositif de commutation. Mais, au lieu de ces fusibles internes, il peut être préférable d'utiliser des fusibles « externes ».

Le dispositif peut également comprendre une diode auxiliaire montée en parallèle entre l'entrée du bloc de protection primaire associé au module de générateur(s) électrochimique(s) placé le plus en amont, relativement au sens de circulation du courant, et la sortie du bloc de protection primaire associé au module de générateur(s) électrochimique(s) placé le plus en aval, relativement audit sens de circulation du courant. Cette diode auxiliaire permet de rééquilibrer l'ensemble de batterie. De plus, cela permet d'étendre l'ensemble de batterie à plus de quatre modules de générateur(s) en série. Mais, en variante, on peut également prévoir un « point milieu ».

L'invention concerne également une batterie comportant au moins deux modules de générateur(s) électrochimique(s) montés en série, comprenant chacun au moins un générateur électrochimique, et couplés à un dispositif de protection du type de celui présenté ci-avant.

Par ailleurs, l'invention est particulièrement adaptée aux ensembles de batterie dont les générateurs électrochimiques sont choisis dans un groupe comprenant au moins les générateurs au lithium, comme par exemple les générateurs lithium / ion (Li/lon), et les générateurs à polymères.

D'autres caractéristiques et avantages de l'invention apparaîtront à l'examen de la description détaillée ci-après, et des dessins annexés, sur lesquels :
- la figure 1 illustre de façon schématique un exemple de réalisation d'un circuit de protection de type 1S de l'art antérieur,
- la figure 2 illustre de façon schématique un exemple d'ensemble de batterie de l'art antérieur comportant quatre modules de générateurs électrochimiques montés en série et couplés à un circuit électronique de type 4S,
- la figure 3 illustre de façon schématique un exemple de réalisation d'un ensemble de batterie selon l'invention comportant deux modules de générateurs électrochimiques montés en série et couplés à un dispositif de protection selon l'invention, de type « 2x1S »,
- la figure 4 illustre une première variante de l'exemple de réalisation de la figure 3,
- la figure 5 illustre une seconde variante de l'exemple de réalisation de la figure 3, et
- la figure 6 illustre de façon schématique un exemple de réalisation d'un ensemble de batterie selon l'invention comportant quatre modules de générateurs électrochimiques montés en série et couplés à un dispositif de protection selon l'invention, de type « 4x1S ».

Les dessins annexés sont, pour l'essentiel, de caractère certain. En conséquence, ils pourront non seulement servir à compléter l'invention, mais aussi contribuer à sa définition, le cas échéant.

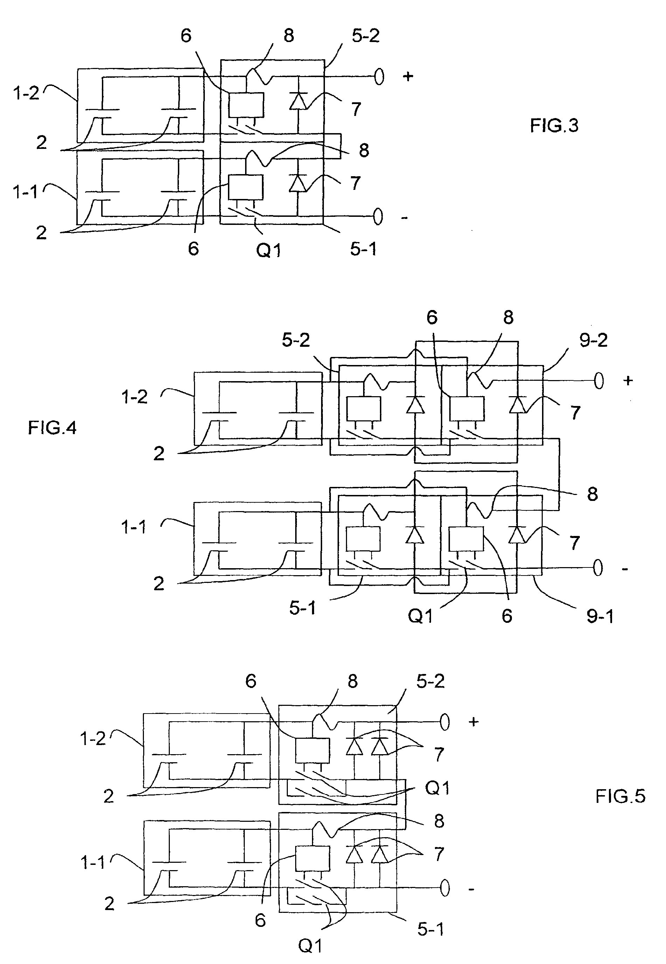

On se réfère tout d'abord à la figure 3 pour décrire un premier exemple de réalisation d'un ensemble de batterie selon l'invention.

Dans ce premier exemple, l'ensemble de batterie comporte tout d'abord deux modules de générateurs électrochimiques 1-1 et 1-2, montés en série et comprenant chacun deux générateurs électrochimiques 2, comme par exemple des générateurs rechargeables de type lithium-ion (Li-ion).

Afin de contrôler ses charges et décharges, l'ensemble de batterie comporte également un dispositif de protection comprenant autant de blocs de protection primaires 5-i (ici i=1,2) qu'il y a de modules de générateurs électrochimiques 1-i.

Chaque bloc de protection primaire 5-1 ou 5-2 est monté en parallèle avec l'un des modules de générateurs électrochimiques 1-1 et 1-2 et comprend au moins un circuit électronique de protection 6, de type « 1S », assimilé sur la figure 3 à son circuit intégré (IC), et une diode 7 montée en parallèle avec le circuit électronique 18 6 et en amont de celui-ci relativement au sens de circulation du courant entre les bornes de connexion matérialisées par les signes « - » et « + ».

Préférentiellement, chaque bloc de protection primaire 5-i peut comporter un fusible interne 8 monté entre la sortie de son circuit de protection 6 et la sortie de sa diode 7. Il s'agit, par exemple, d'un fusible à retard, 5 ampères, du type de celui commercialisé par la société SOC sous la référence MMCT5A. Mais, on peut utiliser d'autres ampérages comme par exemple 7, 8 ou 10 ampères.

Le type du fusible peut être choisi de sorte qu'il assure également la protection thermique de certains composants du bloc de protection, comme par exemple les MOSFETs. Dans ce cas, il s'agit d'un thermofusible ou d'un thermostat limiteur de courant.

En variante, plutôt que d'intégrer le fusible dans le bloc de protection primaire 5-i, on peut utiliser un fusible externe.

La diode 7 est préférentiellement destinée à supporter des courants compris entre 1 et 5 ampères. Par exemple il s'agit d'une diode de type S3A (3 ampères). De nombreux types de diodes peuvent être utilisés. Il est cependant préférable de ne pas utiliser une diode de type Schottky, en raison de sa consommation électrique importante.

Le circuit de protection 1S est par exemple du type de celui illustré sur la figure 1. Dans ce cas, il comprend principalement :
- un circuit intégré IC,
- deux transistors à effet de champ Q1 constituant le dispositif de commutation principal, de préférence de type MOSFET, et présentant par exemple des impédances de quelques dizaines de milliohms (mΩ),
- une résistance R1, de préférence de type quart de watt, 5%, et par exemple de quelques centaines d'ohms (Ω),
- une résistance R2, de préférence de type 5% et par exemple de l'ordre du kiloohm (kΩ),
- un condensateur C1, de préférence de type céramique Y5V, 25 volts et présentant par exemple une capacité de l'ordre du dixième de microfarad (µF),
- un condensateur C2, de préférence de type céramique X7R, 16 volts, et présentant par exemple une capacité de l'ordre du dixième de microfarad (µF),
- un condensateur C3, de préférence de type céramique Y5V, 25 volts et présentant par exemple une capacité de l'ordre du dixième de microfarad (µF),
- un condensateur C4, de préférence de type céramique Y5V, 25 volts et présentant par exemple une capacité de l'ordre du dixième de microfarad (µF),
- une diode Zener ZD.

Bien entendu cet exemple de circuit 1S est non limitatif. Tout autre type de circuit électronique de protection 1S peut être utilisé pour mettre en oeuvre l'invention.

Le circuit électronique 1S 6 est classiquement destiné à contrôler l'état de charge du module de générateur électrochimique 1-i auquel son bloc de protection primaire 5-i est couplé, en parallèle, de manière à éviter les surcharges et les décharges trop fortes. Plus précisément, il compare en permanence la tension aux bornes du générateur électrochimique 1-i à une tension seuil minimale, par exemple égale à environ 2,5 volts, et à une tension seuil maximale, par exemple égale à environ 4,2 volts. Dès que la tension du module de générateurs électrochimiques 1-i devient inférieure à la tension seuil minimale, ou supérieure à la tension seuil maximale, le circuit intégré lC ordonne aux MOSFET Q1 d'ouvrir le circuit, de sorte que le module de générateurs électrochimiques 1-i cesse de se décharger ou de se charger. La présence de la diode 7 permet alors au courant d'être dérivé (ou « by-passed ») vers le bloc de protection primaire suivant, couplé au module de générateurs électrochimiques suivant. On peut ainsi continuer à décharger les autres modules de générateurs montés en série, et donc équilibrer l'ensemble de batterie.

L'équilibrage est obtenu par décharge dite « profonde », c'est-à-dire sur une résistance ou sur l'alimentation à courant pas trop important, par ouverture du circuit 6 de chaque bloc de protection primaire 5-i sur son seuil bas (ou tension seuil minimale). La tension variant beaucoup dans la région du seuil bas, il est donc facile d'obtenir un rééquilibrage efficace.

On se réfère maintenant à la figure 4 pour décrire une première variante du dispositif de protection illustré sur la figure 3.

Dans cette variante, le dispositif comporte des blocs de protection secondaires 9-i. Plus précisément, chaque bloc de protection primaire 5-i est couplé, en parallèle, à au moins un bloc de protection secondaire 9-i. Cette variante peut notamment être utilisée lorsque les MOSFETs Q1, du dispositif de commutation principal du circuit de protection 1S, ne sont pas adaptés pour supporter le courant.

Chaque bloc de protection secondaire 9-i est constitué sensiblement de la même façon qu'un bloc de protection primaire 5-i. Il comporte par conséquent au moins un circuit électronique de protection 6, de type « 1S », assimilé sur la figure 4 à son circuit intégré (IC), et une diode 7 montée en parallèle avec le circuit électronique 1S 6 et en amont de celui-ci relativement au sens de circulation du courant entre les bornes de connexion matérialisées par les signes « - » et « + ». Chaque bloc de protection secondaire 9-i peut comporter un fusible interne 8 monté entre la sortie de son circuit de protection 6 et la sortie de sa diode 7. Mais il peut être plus avantageux d'utiliser des fusibles externes.

Egalement de préférence, les blocs de protection secondaires 9-i présentent des caractéristiques identiques à celles des blocs de protection primaires 5-i. Par ailleurs, chaque bloc de protection primaire 5-i n'est pas forcément couplé, en parallèle, à un seul bloc de protection secondaire 9-i. Il peut en effet être nécessaire dans certains cas de mettre en parallèle avec chaque module de générateurs électrochimiques 1-i trois ou quatre blocs de protection.

On se réfère maintenant à la figure 5 pour décrire une seconde variante du dispositif de protection illustré sur la figure 3.

Dans cette variante, plutôt que de mettre en parallèle plusieurs blocs de protection 5-i et 9-i, comme dans la variante précédente, on monte, dans chaque bloc de protection primaire 5-i, en parallèle avec le dispositif de commutation principal Q1 au moins un dispositif de commutation auxiliaire, également constitué de MOSFETs Q1. Les MOSFETs Q1 mis en parallèle sont de préférence identiques, mais ils peuvent également présenter des impédances différentes.

Par ailleurs, dans cette variante, comme illustré sur la figure 5, on peut monter, au sein de chaque bloc de protection primaire 5-i, deux diodes 7 en parallèle avec chaque circuit électronique 1S 6 et en amont de celui-ci.

Les caractéristiques des composants constituant le circuit 1S 6, des diodes 7 et 10 et du fusible 8 sont bien entendu choisies en fonction, notamment, du courant maximal autorisé, des tensions de déclenchement et du type du générateur électrochimique.

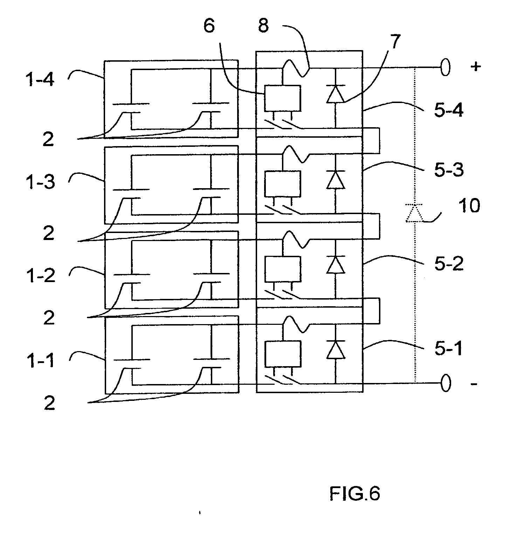

On se réfère maintenant à la figure 6 pour décrire un autre exemple de dispositif de protection. Ce qui différencie cet exemple de celui illustré sur la figure 3, c'est le nombre de modules de générateurs électrochimiques 1-i de l'ensemble de batterie, et par conséquent le nombre de blocs de protection primaires 5-i du dispositif de protection. Ici, on prévoit 4 modules de générateurs électrochimiques 1-1 à 1-4 respectivement couplés à 4 blocs de protection primaires 5-1 à 5-4.

Par conséquent, au lieu d'avoir un dispositif de protection de type 2x1 S, on a un dispositif de type 4x1 S. Le fonctionnement de cet ensemble de batterie est donc identique à celui de l'ensemble de la figure 3.

Bien entendu, comme dans les variantes des figures 4 et 5, le dispositif de protection de la figure 6 peut comporter des blocs de protection secondaires 9-i si cela s'avère nécessaire, ou bien plusieurs MOSFETs de commutation.

Par ailleurs, comme cela est illustré en pointillé sur la figure 6, le dispositif de protection selon l'invention peut également comporter une diode auxiliaire 10 montée en parallèle entre l'entrée du bloc de protection primaire 5-1 associé au module de générateurs électrochimiques 1-1 placé le plus en amont, relativement au sens de circulation du courant, et la sortie du bloc de protection primaire 5-4 associé au module de générateurs électrochimiques 1-4 placé le plus en aval, relativement audit sens de circulation du courant. Cette diode auxiliaire 10 est sensiblement du même type que les autres diodes 7, et placée entre les deux bornes « - » et « + » de l'ensemble de batterie. Elle est tout particulièrement utile lorsque le courant de décharge d'équilibrage et la tension seuil des diodes sont limites. Ce mode de réalisation convient donc particulièrement bien aux ensembles de batterie comportant au moins trois ou quatre modules de générateurs électrochimiques 1-i. Il permet en effet d'étendre l'ensemble de batterie à plus de quatre modules de générateurs en série, par exemple à plusieurs groupes de trois ou quatre modules de générateurs électrochimiques. On peut ainsi constituer, par exemple, deux groupes de 3 ou 4 modules ou trois ou quatre groupes de 3 modules, combinés éventuellement à un autre groupe de 2 modules ou à un unique module. La combinaison est en fait choisie de manière à minimiser le nombre de diodes, et à éviter, de préférence, que plus de 4 modules soient montés sans diode auxiliaire.

Mais, en variante, on peut prévoir un « point milieu » au lieu de la diode auxiliaire. A cet effet, en fonction du nombre de modules on pourra utiliser un connecteur 4 ou 6 points, voire plus encore.

L'invention permettant de n'utiliser que des blocs de protection à circuit électronique 1S, il est donc possible d'envisager une standardisation des circuits de protection.

Par ailleurs, chaque module de générateurs électrochimiques étant désormais couplé à un bloc de protection du dispositif de protection selon l'invention, implantable dans le couvercle de l'ensemble de batterie, la position du bloc de protection est désormais sensiblement figée, ce qui permet de tester ledit bloc de protection couplé au module de générateur(s) électrochimique(s) de façon industrielle.

De plus, le dispositif pouvant désormais être logé dans le couvercle de l'ensemble de batterie, il devient donc possible de réduire l'encombrement des ensembles de batterie.

Enfin, grâce à l'invention, on peut obtenir un équilibrage (ou « balancing ») réellement efficace des différents modules de générateurs électrochimiques de l'ensemble de batterie.

L'invention ne se limite pas aux modes de réalisation de dispositifs de protection et d'ensembles de batterie décrits ci-avant, seulement à titre d'exemple, mais elle englobe toutes les variantes que pourra envisager l'homme de l'art dans le cadre des revendications ci-après.

## Revendications

1. Dispositif de protection pour un ensemble de batterie comportant au moins deux modules de générateur(s) électrochimique(s) (1-i), montés en série et comprenant chacun au moins un générateur électrochimique (2), **caractérisé en ce qu'**il comprend autant de blocs de protection primaires (5-i) que de modules de générateur(s) électrochimique(s) (1-i), chaque bloc (5-i) étant monté en parallèle avec l'un desdits modules de générateur(s) électrochimique(s) (1-i) et comportant au moins un circuit électronique de protection (6), de type « 1S », et une diode (7), montée en parallèle avec ledit circuit électronique 1S (6) et en amont de celui-ci relativement au sens de circulation du courant.

2. Dispositif de protection selon la revendication 1, **caractérisé en ce que**, ledit ensemble de batterie comportant trois modules de générateur(s) électrochimique(s) (1-i), il comprend trois blocs de protection primaires (5-i) montés chacun en parallèle avec l'un desdits modules de générateur(s) électrochimique(s).

3. Dispositif de protection selon la revendication 1, **caractérisé en ce que**, ledit ensemble de batterie comportant quatre modules de générateur(s) électrochimique(s) (1-i), il comprend quatre blocs de protection primaires (5-i) montés chacun en parallèle avec l'un desdits modules de générateur(s) électrochimique(s).

4. Dispositif de protection selon l'une des revendications 1 à 3, **caractérisé en ce qu'**il comprend au moins un bloc de protection secondaire (9-i) monté en parallèle avec l'un desdits blocs de protection primaires (5-i) et comportant au moins un circuit électronique de protection (6), de type « 1 S », et une diode (7), montée en parallèle avec ledit circuit électronique 1 S et en amont de celui-ci relativement au sens de circulation du courant.

5. Dispositif de protection selon l'une des revendications 1 à 3, **caractérisé en ce que** chaque bloc de protection primaire (5-i) comprend un dispositif principal de commutation (Q1) monté en parallèle avec au moins un dispositif auxiliaire de commutation (Q1).

6. Dispositif de protection selon l'une des revendications 1 à 5, **caractérisé en ce que** chaque bloc de protection primaire (5-i) et/ou chaque bloc de protection secondaire (9-i) comporte un fusible (8) monté entre une sortie dudit circuit de protection (6) et une sortie de ladite diode (7).

7. Dispositif de protection selon la revendication 6, **caractérisé en ce que** chaque fusible (8) est un thermofusible.

8. Dispositif de protection selon l'une des revendications 5 à 7, **caractérisé en ce que** certains au moins desdits blocs de protection secondaires (9-i) sont identiques au bloc de protection primaire (5-i) auquel ils sont couplés en parallèle.

9. Dispositif de protection selon l'une des revendications 1 à 8, **caractérisé en ce qu'**il comprend une diode auxiliaire (10) montée en parallèle entre une entrée du bloc de protection primaire (5-1) associé au module de générateur(s) électrochimique(s) (1-1) placé le plus en amont, relativement au sens de circulation du courant, et une sortie du bloc de protection primaire (5-4) associé au module de générateur(s) électrochimique(s) (1-4) placé le plus en aval, relativement audit sens de circulation du courant.

10. Ensemble de batterie comportant au moins deux modules de générateur(s) électrochimique(s) (1-i) montés en série et comprenant chacun au moins un générateur électrochimique (2), **caractérisé en ce qu'**il comprend un dispositif selon l'une des revendications précédentes.

11. Ensemble de batterie selon la revendication 10, **caractérisé en ce que** chaque générateur électrochimique (2) est choisi dans un groupe comprenant au moins les générateurs au lithium, et en particulier les générateurs lithium / ion (Li/Ion), et les générateurs à polymères.

## Claims

1. A protection device for a battery assembly comprising at least two electrochemical cell modules (1-i), connected in series and each comprising at least one electrochemical cell (2), the device being **characterized in that** it comprises as many primary protection blocks (5-i) as electrochemical cell modules (1-i), each block (5-i) being connected in parallel with one of said electrochemical cell modules (1-i), and comprising at least one 1S type electronic protection circuit (6), and a diode (7) connected in parallel with said 1S electronic circuit (6) and upstream therefrom relative to the current flow direction.

2. A protection device according to claim 1, **characterized in that** said battery assembly comprises three electrochemical cell modules (1-i), and the device comprises three primary protection blocks (5-i) each connected in parallel with a respective one of said electrochemical cell modules.

3. A protection device according to claim 1, **characterized in that** said battery assembly comprises four electrochemical cell modules (1-i), and the device comprises four primary protection blocks (5-i) each connected in parallel with a respective one of said electrochemical cell modules.

4. A protection device according to one of claims 1 to 3, **characterized in that** it includes a secondary protection block (9-i) connected in parallel with one of said primary protection blocks (5-i), and comprising at least one 1S type electronic protection circuit (6) and a diode (7) connected in parallel with said 1S electronic circuit and upstream therefrom relative to the current flow direction.

5. A protection device according to one of claims 1 to 3, **characterized in that** each primary protection block (5-i) includes a main switch device (Q1) connected in parallel with at least one auxiliary switch device (Q1).

6. A protection device according to one of claims you will one to 5, **characterized in that** each primary protection block (5-i) and/or each secondary protection block (9-i) includes a fuse (8) connected between an output of said protection circuit (6) and an output of said diode (7).

7. A protection device according to claim 6, **characterized in that** each fuse (8) is a thermofuse.

8. A protection device according to one of claims 5 to 7, **characterized in that** at least some of said secondary protection blocks (9-i) are identical to the respective primary protection blocks (5-i) with which they are connected in parallel.

9. A protection device according to one of claims 1 to 8, **characterized in that** it includes an auxiliary diode (10) connected in parallel between an input of the primary protection block (5-1) associated with the electrochemical cell module (1-1) placed furthest upstream relative to the current flow direction, and an output of the primary protection block (5-4) associated with the electrochemical cell module (1-4) placed furthest downstream relative to said current flow direction.

10. A battery assembly comprising at least two electrochemical cell modules (1-i) connected in series and each comprising at least one electrochemical cell (2), the battery assembly being **characterized in that** it includes a device according to one of the preceding claims.

11. A battery assembly according to claim 10, **characterized in that** each electrochemical cell (2) is selected from the group comprising at least lithium cells, and in particular lithium-ion (Li-ion) cells and polymer cells.

## Patentansprüche

1. Schutzvorrichtung für einen Batteriesatz, umfassend mindestens zwei elektrochemische Stromerzeugungsmodule (1-i), die in Reihe geschaltet sind und jedes mindestens einen elektrochemischen Stromerzeuger (2) umfassen, **dadurch gekennzeichnet, dass** sie ebenso viele Primärschutzblöcke (5-i) wie Stromerzeugungsmodule (1-i) umfasst, wobei jeder Block (5-i) mit einem dieser elektrochemischen Stromerzeugungsmodule (1-i) parallel geschaltet ist und mindestens eine elektronische Schutzschaltung (6) des Typs "1S" umfasst, und eine Diode (7), die mit dieser elektronischen 1S-Schaltung (6) parallel geschaltet ist und in Richtung des Stromflusses vor dieser liegt.

2. Schutzvorrichtung nach Anspruch 1, **dadurch gekennzeichnet, dass** der Batteriesatz drei elektrochemische Stromerzeugungsmodule (1-i) umfasst, sie drei Primärschutzblöcke (5-i) umfasst, die jeder mit einem der elektrochemischen Stromerzeugungsmodule parallel geschaltet sind.

3. Schutzvorrichtung nach Anspruch 1, **dadurch gekennzeichnet, dass** der Batteriesatz vier elektrochemische Stromerzeugungsmodule (1-i) umfasst, sie vier Primärschutzblöcke (5-i) umfasst, die jeder mit einem der elektrochemischen Stromerzeugungsmodule parallel geschaltet sind.

4. Schutzvorrichtung nach einem der Ansprüche 1 bis 3, **dadurch gekennzeichnet, dass** sie mindestens einen Sekundärschutzblock (9-i) umfasst, der mit einem der Primärschutzblöcke (5-i) parallel geschaltet ist und mindestens eine elektronische Schutzschaltung (6) des Typs "1S" umfasst, und eine Diode (7), die mit dieser 1S-Schaltung parallel geschaltet ist und in Richtung des Stromflusses vor dieser liegt.

5. Schutzvorrichtung nach einem der Ansprüche 1 bis 3, **dadurch gekennzeichnet, dass** jeder Primärschutzblock (5-i) eine Hauptschalteinrichtung (Q1) umfasst, die mit mindestens einer Hilfsschaltvorrichtung (Q1) parallel geschaltet ist.

6. Schutzvorrichtung nach einem der Ansprüche 1 bis 5, **dadurch gekennzeichnet, dass** jeder Primärschutzblock (5-i) und/oder jeder Sekundärschutzblock (9-i) eine Sicherung (8) umfasst, die zwischen einem Ausgang der Schutzschaltung (6) und einem Ausgang der Diode (7) angeordnet ist.

7. Schutzschaltung nach Anspruch 6, **dadurch gekennzeichnet, dass** jede Sicherung (8) eine Thermosicherung ist.

8. Schutzvorrichtung nach einem der Ansprüche 5 bis 7, **dadurch gekennzeichnet, dass** mindestens bestimmte der Sekundärschutzblöcke (9-i) mit dem Primärschutzblock (5-i), mit welchem sie parallel geschaltet sind, identisch sind.

9. Schutzvorrichtung nach einem der Ansprüche 1 bis 8, **dadurch gekennzeichnet, dass** sie eine Hilfsdiode (10) umfasst, die zwischen einem Eingang des Primärschutzblocks (5-i), der mit dem elektrochemischen Stromerzeugungsmodul (1-1) verbunden ist, der in Richtung des Stromflusses am weitesten vorne liegt, und einem Ausgang des Primärschutzblocks (5-4) parallel geschaltet ist, der mit dem elektrochemischen Stromerzeugungsmodul (1-4) verbunden ist, der in Richtung des Stromflusses am weitesten hinten liegt.

10. Batteriesatz, umfassend mindestens zwei elektrochemische Stromerzeugungsmodule (1-i), die in Reihe geschaltet sind und jedes mindestens einen elektrochemischen Stromerzeuger (2) umfassen, **dadurch gekennzeichnet, dass** er mindestens eine Vorrichtung nach einem der vorherigen Ansprüche umfasst.

11. Batteriesatz nach Anspruch 10, **dadurch gekennzeichnet, dass** jeder elektrochemische Stromerzeuger (2) aus einer Gruppe gewählt wird, die mindestens Lithium-Stromerzeuger und insbesondere Lithium-Ionen- (Li/Ion) und Polymer-Stromerzeuger umfasst.
